(19) Europäisches Patentamt
European Patent Office
Office européen des brevets

(11) EP 0 636 859 B1

(12) **EUROPÄISCHE PATENTSCHRIFT**

(45) Veröffentlichungstag und Bekanntmachung des Hinweises auf die Patenterteilung:
**07.01.1998 Patentblatt 1998/02**

(51) Int Cl.$^6$: **G01B 5/012**, G01B 11/00, G01B 7/012

(21) Anmeldenummer: **94111530.5**

(22) Anmeldetag: **23.07.1994**

(54) **Mehrkoordinaten-Tastkopf**

Multi-coordinate measuring head

Tête de palpage de cordonnées multiples

(84) Benannte Vertragsstaaten:
**DE FR GB IT**

(30) Priorität: **31.07.1993 DE 4325744**

(43) Veröffentlichungstag der Anmeldung:
**01.02.1995 Patentblatt 1995/05**

(73) Patentinhaber: **Dr. Johannes Heidenhain GmbH D-83292 Traunreut (DE)**

(72) Erfinder: **Ernst, Alfons, Dipl.-Ing. D-83301 Traunreut (DE)**

(56) Entgegenhaltungen:
| | |
|---|---|
| EP-A- 0 106 033 | EP-A- 0 269 795 |
| EP-A- 0 270 322 | EP-A- 0 362 625 |
| WO-A-91/14923 | DE-A- 2 019 895 |
| DE-A- 3 725 205 | GB-A- 2 006 435 |

## Beschreibung

Die Erfindung bezieht sich auf einen Mehrkoordinaten-Tastkopf gemäß dem Oberbegriff des Anspruches 1. Aus diversen Druckschriften sind Mehrkoordinaten-Tastköpfe bekannt. Alle verfügen über Sensoren, die bei Antastung eines Objektes ein Antastsignal liefern. Die Art der Sensoren ist unterschiedlich: Es können beispielsweise elektrische Schalter sein, oder lichtelektrische Meßsysteme oder auch Abstandssensoren. Derartige Ausführungsformen finden sich in DE- 23 47 633-C3; DE- 35 08 396-C1; EP- 0 361 164-A1.

Bei Antastung von Objekten mittels eines derartigen Mehrkoordinaten-Tastkopfes wird ein das Objekt berührender Taststift ausgelenkt, der an seinem freien Ende eine Tastkugel trägt. Die Bauart der Sensoren bedingt es, daß die Generierung eines Antastsignales nach mehr oder weniger Auslenkung des Taststiftes ausgelöst wird.

Aus der GB-A-2 006 435 ist ein schaltender Mehrkoordinaten-Tastkopf bekannt, bei dem eine Tastkugel zum Schwingen angeregt wird und die Änderung der Schwingfrequenz als Antastsignal bestimmt wird. Zum Detektieren des Antastvorganges sind mehrere Sensoren räumlich verteilt um das Zentrum der Tastkugel angeordnet.

Ein weiterer schaltender Mehrkoordinaten-Tastkopf ist in der EP-A-0 269 795 beschrieben. Der Taststift ist in einer Mehrpunktlagerung auslenkbar gehalten. Die Mehrpunktlagerung wird von drei Kugeln oder einem Ring gebildet, die bzw. der sich auf einer sphärisch gekrümmten Oberfläche abstützen bzw. abstützt. Der Mittelpunkt dieser Krümmung liegt im Zentrum der Tastkugel. Zum Detektieren des Antastvorganges wird der elektrische Kontakt zwischen den Kugeln/Ring und der gekrümmten Fläche verwendet.

Aus der DE-A-37 25 205 und der EP-A-0 106 033 sind messende Mehrkoordinaten-Tastköpfe bekannt, bei denen die Meßachsen der Sensoren parallel zu den Koordinatenachsen verlaufen.

Der Erfindung liegt die Aufgabe zugrunde, einen messenden Mehrkoordinaten-Tastkopf zu schaffen, der einfach aufgebaut ist, eine hohe Meßgenauigkeit und eine hohe Ansprechempfindlichkeit aufweist.

Diese Aufgabe wird durch die Merkmale des Anspruches 1 gelöst.

Durch die Merkmale der abhängigen Ansprüche wird ein erfindungsgemäßer Mehrkoordinaten-Tastkopf vorteilhaft ausgestaltet.

Die Vorteile der erfindungsgemäßen Mehrkoordinaten-Tastköpfe liegen darin, daß bereits geringste Antastkräfte eine Auslösung eines einen Meßwert bildenden Meßsignales bewirken.

Anhand der Zeichnungen wird die Erfindung durch mehrere Ausführungsbeispiele näher erläutert.

Es zeigt

Figur 1      einen Mehrkoordinaten-Tastkopf im Querschnitt;

Figur 2      eine erste Variante;

Figur 2a      eine stark vereinfachte Draufsicht auf den inneren Aufbau;

Figur 3      eine zweite Variante und

Figur 4      eine weitere Ausführungsform.

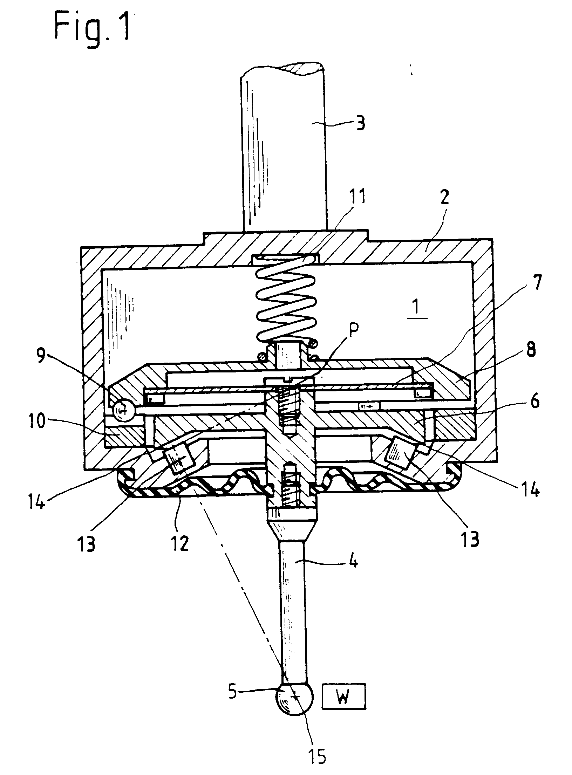

Ein in Figur 1 dargestellter Mehrkoordinaten-Tastkopf 1 weist ein Gehäuse 2 auf, welches mit Hilfe eines Schaftes 3 in eine Maschine eingespannt werden kann. Aus dem Gehäuse 2 ragt auf der dem Schaft 3 gegenüberliegenden Seite ein Taststift 4 heraus, der an seinem freien Ende eine Tastkugel 5 trägt. Der Taststift 4 ist über einen steif mit ihm verbundenen Teller 6 im Gehäuse 2 gelagert. Die Lagerung im Gehäuse 2 erfolgt mittels eines elastischen Elementes, hier einer Membrane 7, die ihrerseits mit einem Ring 8 verbunden ist, der in bekannter Weise statisch bestimmt über Lagerkugeln 9 auf einem Absatz 10 des Gehäuses 2 aufliegt. Eine Feder 11 drückt über den Ring 8, die Membrane 7 und den Teller 6 den Taststift 4 in seine Ruhelage, aus der heraus er ausgelenkt wird, wenn ein Objekt - also ein Werkstück W - angetastet wird. Ein Balg 12 schließt das zur Taststiftseite offene Gehäuse dichtend ab.

Im Gehäuse 2 befinden sich Sensoren 13, die Meßflächen 14 am Teller 6 gegenüberliegen. Die Sensoren 13 sind zusammen mit den Meßflächen 14 so ausgerichtet, daß sich ihre Meßachsen im Zentrum der Tastkugel 5 schneiden, wobei dieses Zentrum einen sogenannten Antast-Pol 15 bildet.

Sie sind also so angeordnet, daß ihre Mittellinien, die der Meßrichtung entsprechen, sich im Kugelmittelpunkt 15 treffen. Die Meßflächen 14 sind senkrecht zur Verbindungslinie Mitte Sensor 13 -> Kugelmitte 15 angeordnet oder bilden eine Sphäre mit dem Zentrum im Kugelmittelpunkt 15. Berührt die Tastkugel 5 ein Werkstück W, so verformt sich zunächst das Federelement 7. Dadurch ändert sich der Abstand Sensor 13 - Meßfläche 14 und es entstehen in den Sensoren 13 Signale, aus denen die Bewegung der Tastkugel 5 in x-, y- und z-Richtung berechnet werden kann.

Die Bewegung der Tastkugel 5 kann also ermittelt werden, bevor der Teller 8 von seiner Lagerung 9 abhebt.

Wenn in einer Betriebsart, die in der Fachsprache "scannen" oder "digitalisieren" heißt, gearbeitet wird, muß die Tastkugel 5 nur wenig ausgelenkt werden, so daß der Ring 8 in seiner Ruheposition verbleiben kann.

Vorteilhaft ist dabei, daß es sich um einen messenden Mehrkoordinaten-Tastkopf mit sehr einfachem Aufbau handelt. Es ist eine hohe Meßgenauigkeit zu erzielen, da außer der Verbiegung des Taststiftes 4, die sich leicht rechnerisch korrigieren läßt, keine mechanischen Deformationen vorkommen. Der Meßbereich ist zwar gering, für diese Betriebsart aber ausreichend.

Die Meßwerte sind aus den Sensorsignalen nach einem einfachen Algorithmus zu errechnen:
Sind S1, S2, S3, S4 die Signale der Sensoren 13, so ergibt sich bei vier Sensoren 13 in den Halbkoordinaten X bzw. -X und Y bzw. -Y in erster Näherung der mathematische Zusammenhang:

$$x = (S1-S2) * (\sin \alpha) / 2 = C1 * (S1-S2)$$

$$y = (S3-S4) * (\sin \alpha) / 2 = C1 * (S3-S4)$$

$$z = (S1+S2+S3+S4) * (\cos \alpha) / 4 = C2 * (S1+S2+S3+S4)$$

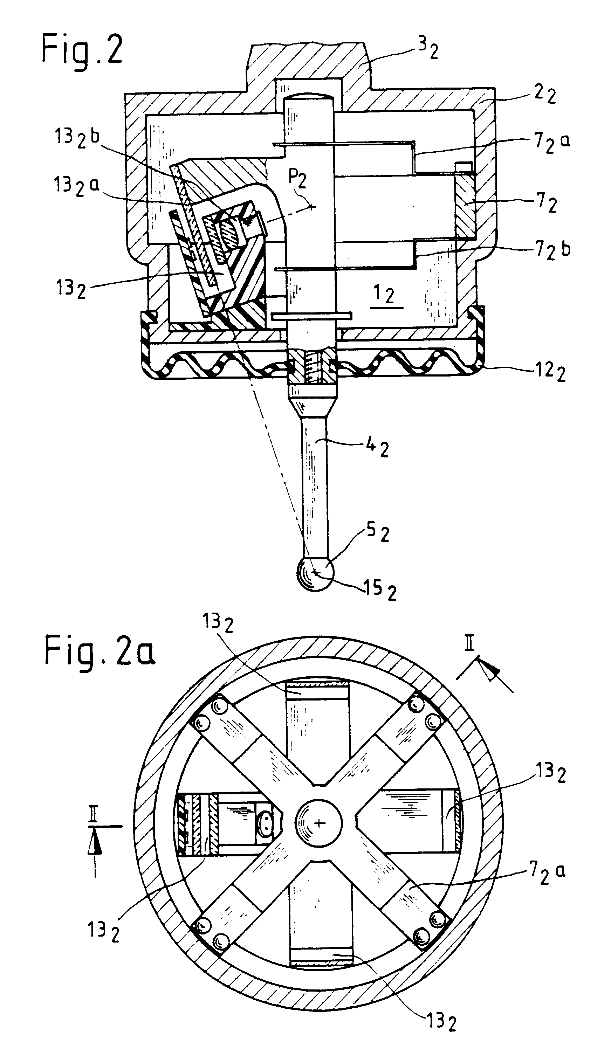

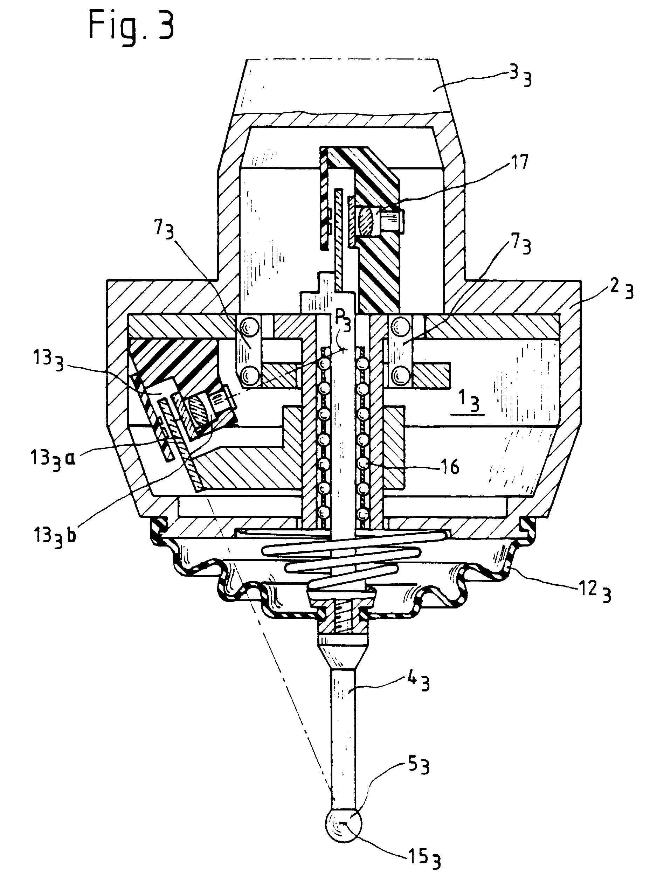

Selbstverständlich sind als Sensoren auch inkrementale oder codierte Meßsysteme vorsehbar, die in Form von lichtelektrischen Meßsystemen realisiert sein können oder auf einem anderen physikalischen Wirkprinzip beruhen. Derartige Anordnungen sind anhand der Figuren 2 und 3 beschrieben.

Um die Übersicht zu erleichtern, sind wirkungsmäßig gleichartige Bauelemente mit gleichen Bezugszeichen versehen, denen als Index die Figurenbezifferung nachgestellt ist.

Ein Mehrkoordinaten-Tastkopf $1_2$ besteht aus den Grundelementen Gehäuse $2_2$ mit Schaft $3_2$ und Taststift $4_2$, der mittels einer Lagerung im Gehäuse $2_2$ beweglich gelagert ist. Die Lagerung besteht aus einem Federelement $7_2$ in Form von zwei kreuzförmigen Blattfedern $7_2$a und $7_2$b, die so geformt sind, daß in axialer Richtung ein großer Hub möglich ist. Dies ist in der schematischen Draufsicht in Figur 2a erkennbar, aus der auch die vierfache Anordnung der Sensoren $13_2$ ersichtlich ist. Das sich in axialer Richtung erstreckende Federteil erlaubt eine Längenzunahme, die eine Membrane - wie etwa gemäß Figur 1 - zerstören würde. Außerdem ergibt sich eine gewisse Nachgiebigkeit in den beiden anderen Koordinaten Richtungen.

Durch entsprechende Wahl der Gestaltparameter und des Abstandes der Blattfedern kann der Mehrkoordinaten-Tastkopf $1_2$ mit gleicher Kennlinie für die Antastkraft, auch Steifigkeit genannt, in den Koordinaten-Richtungen X, Y und Z ausgerüstet werden.

Zwischen den Armen der kreuzförmigen Blattfedern $7_2$a und $7_2$b werden Meßaufnehmer als Sensoren $13_2$ angeordnet, die hier als lichtelektrische Meßsysteme mit Maßstab $13_2$a und Abtastkopf $13_2$b ausgebildet sind. Bei einer Antastkraft in x- oder y-Richtung an der Tastkugel $5_2$ ergibt sich eine Kippbewegung des Taststiftes $4_2$ mit dem Pol in P. Durch P und senkrecht zur Meßrichtung des Maßstabes $13_2$a ist die optische Achse des Abtastkopfes $13_2$b gelegt, so daß sich bei kleinen Auslenkungen der Tastkugel $5_2$ in x- und y-Richtung der Abstand zwischen Maßstab $13_2$a und Abtastkopf $13_2$b nicht ändert.

Eine weitere Ausgestaltung dieser Lösung zeigt Figur 3.

Eine zusätzliche Längsführung, die als Kugelführung 16 ausgebildet ist, erlaubt große Meßwege in Z-Richtung, wobei ein separater Sensor in Form einer lichtelektrischen Meßeinrichtung 17 vorgesehen ist. Das elastische Element $7_3$ kann dadurch auf die Nachgiebigkeit in z-Richtung verzichten und kann, wie gezeigt, als kardanisches Federgelenk $7_3$ ausgeführt sein. Die Meßfehler, die sich in z-Richtung durch die Reibung der Kugelführung 16 und durch die Nachgiebigkeit des Federkardans $7_3$ ergeben, können von den vier schräg angeordneten Meßsystemen $13_3$ (von denen nur eines dargestellt ist) ermittelt und korrigiert werden.

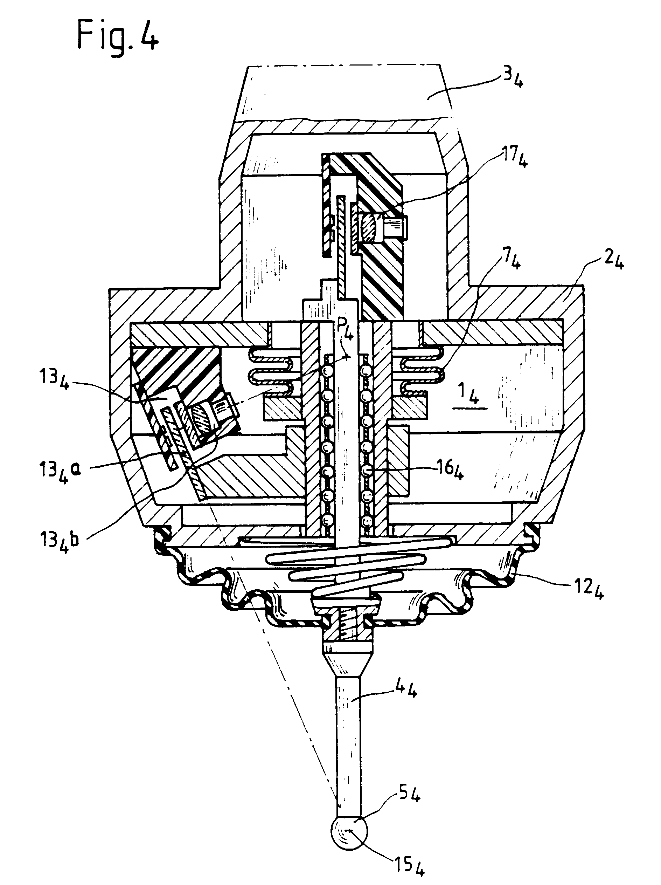

Das in Figur 4 gezeigte Ausführungsbeispiel unterscheidet sich im Kern von der Variante aus Figur 3 dadurch, daß das kardanische Federgelenk durch eine Membrane $7_4$ ersetzt ist.

**Patentansprüche**

1. Mehrkoordinaten-Tastkopf (1; $1_2$; $1_3$; $1_4$) mit einem in drei Koordinatenrichtungen (X, Y, Z) auslenkbaren Taststift (4; $4_2$; $4_3$; $4_4$), an dessen Ende sich eine Tastkugel (5; $5_2$; $5_3$; $5_4$) befindet, deren Zentrum einen Antast-Pol zum Antasten eines Objektes (W) bestimmt, und mit Sensoren (13; $13_2$; $13_3$; $13_4$) zum Detektieren des Antastvorganges, die so angeordnet sind, daß sich ihre Meßachsen in dem Antast-Pol (15; $15_2$; $15_3$; $15_4$) schneiden, dadurch gekennzeichnet, daß die Sensoren (13; $13_2$; $13_3$; $13_4$) quantitative Signale abgeben, aus denen Meßwerte für die Bewegung der Tastkugel (5; $5_2$; $5_3$; $5_4$) in den drei Koordinatenachsen (X, Y, Z) berechnet werden.

2. Mehrkoordinaten-Tastkopf nach Anspruch 1, dadurch gekennzeichnet, daß die Sensoren (13) als Abstands-Sensoren ausgebildet sind.

3. Mehrkoordinaten-Tastkopf nach Anspruch 1, dadurch gekennzeichnet, daß die Sensoren als inkremental oder codiert arbeitende Meßsysteme ($13_2$; $13_3$; $13_4$) ausgebildet sind.

4. Mehrkoordinaten-Tastkopf nach Anspruch 3, dadurch gekennzeichnet, daß die Sensoren als lichtelektrische Meßsysteme ($13_2$; $13_3$; 134) ausgebildet sind.

**Claims**

1. A multi-coordinate feeler head (1; $1_2$; $1_3$; $1_4$) with a feeler rod (4; $4_2$; $4_3$; $4_4$) capable of deflection in three coordinate directions (X, Y, Z), at whose end is located a feeler ball (5; $5_2$; $5_3$; $5_4$), whose centre forms a feeler origin for feeling an object (W), and

with sensors (13; $13_2$; $13_3$; $13_4$) for detecting the feeling operation which are so arranged that their measuring axes intersect in the feeler origin (15; $15_2$; $15_3$; $15_4$), characterized in that the sensors (13; $13_2$; $13_3$; $13_4$) provide quantitative signals, from which measurement values for the movement of the feeler ball (5; $5_2$; $5_3$; $5_4$) in the three coordinate axes (X, Y, Z) are calculated.

2.  A multi-coordinate feeler head according to claim 1, characterized in that the sensors (13) are in the form of distance sensors.

3.  A multi-coordinate feeler head according to claim 1, characterized in that the sensors are in the form of measuring systems ($13_2$; $13_3$; $13_4$) operating incrementally or in coded manner.

4.  A multi-coordinate feeler head according to claim 3, characterized in that the sensors are in the form of photoelectric measuring systems ($13_2$; $13_3$; $13_4$).

**Revendications**

1.  Tête de palpage multi-axes (1; $1_2$; $1_3$; $1_4$) comprenant une touche (4; $4_2$; $4_3$; $4_4$) qui peut être déviée suivant trois axes de coordonnées (X, Y, Z) et à l'extrémité de laquelle se trouve une bille de palpage (5; $5_2$; $5_3$; $5_4$) dont le centre détermine un pôle de palpage pour le palpage d'un objet (W), et des détecteurs (13; $13_2$; $13_3$; $13_4$) pour détecter le palpage, disposés de manière que leurs axes de mesure se croisent au pôle de palpage (15; $15_2$ ; $15_3$; $15_4$), caractérisée par le fait que les détecteurs (13; $13_2$; $13_3$; $13_4$) émettent des signaux quantitatifs à partir desquels peuvent être calculées des valeurs de mesure pour le mouvement de la bille de palpage (5; $5_2$; $5_3$; $5_4$) suivant les trois axes de coordonnées (X, Y, Z).

2.  Tête de palpage multi-axes suivant la revendication 1, caractérisée par le fait que les détecteurs (13) sont réalisés sous forme de détecteurs de proximité.

3.  Tête de palpage multi-axes suivant la revendication 1, caractérisée par le fait que les détecteurs sont réalisés sous forme de systèmes de mesure ($13_2$; $13_3$; $13_4$) à fonctionnement incrémental ou codé.

4.  Tête de palpage multi-axes suivant la revendication 3, caractérisée par le fait que les détecteurs sont réalisés sous forme de systèmes de mesure photoélectriques ($13_2$; $13_3$; $13_4$).

# Fig.1

**Fig.2**

**Fig.2a**

# Fig. 3

EP 0 636 859 B1

Fig.4

8